# EUROPÄISCHE PATENTSCHRIFT

(11) **EP 0 540 597 B1**
(45) Veröffentlichungstag und Bekanntmachung des Hinweises auf die Patenterteilung: **29.12.1993**
(21) Anmeldenummer: 91913387.6
(22) Anmeldetag: 24.07.1991
(51) Int. Cl.: F26B 23/02, F26B 25/00

(54) **VERFAHREN UND ANLAGE ZUM TROCKNEN VON FEUCHTEM GUT**
PROCESS AND INSTALLATION FOR DRYING MOIST MATERIAL
PROCEDE ET INSTALLATION POUR LE SECHAGE DE PRODUITS HUMIDES

(30) Priorität: 24.07.1990 DE 4023518
(43) Veröffentlichungstag der Anmeldung: 12.05.1993
(73) Patentinhaber: FRITZ EGGER GESELLSCHAFT m.b.H., A-6380 St. Johann i.T. (AT)
(72) Erfinder: BÖHLER, Harald, A-6822 Dünserberg (AT)
(74) Vertreter: Sandmann, Joachim, Dr.
(86) Internationale Anmeldenummer: EP9101386
(87) Internationale Veröffentlichungsnummer: WO9201897

(56) Entgegenhaltungen:
- BE-A- 567 659
- DE-A- 2 302 836
- DE-A- 2 501 268
- DE-A- 2 800 238
- DE-A- 4 036 666
- FR-A- 2 466 439
- US-A- 4 926 764
- Patent Abstracts of Japan, vol. 7, no. 230 (M-249) (1375) 12 Oktober 1983 & JP-A- 58124113 (CHIYUUGAI RO KOGYO K.K.) 23 Juli 1983

## Beschreibung

Die Erfindung bezieht sich auf ein Verfahren und eine Anlage zum Trocknen von feuchtem Gut, insbesondere von Holzspänen oder Holzfasern, wie sie im Oberbegriff der Ansprüche 1 bzw. 6 beschrieben und aus der DE-C-28 00 238 bekannt sind.

Durch die bekannte Rückführung von Trocknerabluft in die Brennkammer wird ein Teil der in der Trocknerabluft enthaltenen Schadstoffe aus dem getrockneten Holz, wie Holzteerbestandteile und Holzstaub, durch Verbrennung in der Brennkammer beseitigt, was meist zu einem vollständigen Abbau dieser so rückgeführten Schadstoffe durch Verbrennung führt. Dabei wird die Trocknungsabluft nach der Trennung vom Trockengut mittels einem Zyklon zunächst naß gereinigt, wobei ein Teil der beim Trocknungsprozeß verdampften Flüssigkeit kondensiert. Über die Regelung der in die Brennkammer rückgeführten Menge an Trocknungsabluft wird keine Aussage gemacht. Zur Sicherstellung der Verbrennung bzw. der gewünschten Trocknung muß mit einer ständigen maximalen Frischluftzufuhr gearbeitet werden. Das erhöht in nachteiliger Weise die Abluftmenge mit der Folge, daß die Abgasbehandlungsvorrichtungen für einen entsprechend hohen Durchsatz dimensioniert werden müssen. Außerdem wird für die Aufheizung des an sich nicht benötigten Frischluftanteils Energie verbraucht, was sich nachteilig auf die Betriebskosten des Verfahrens auswirkt.

Dementsprechend liegt der Erfindung die Aufgabe zugrunde, bei umweltschonender und brandverhütender Arbeitsweise möglichst wirtschaftlich zu trocknen, ohne daß schwankende Ausgangsgrößen oder wechselnde Anforderungen die Wirtschaftlichkeit herabsetzen.

Diese Aufgabe wird mit den kennzeichnenden Merkmalen der Ansprüche 1 bzw. 6 gelöst.

Zweckmäßige Ausgestaltungen und Weiterbildungen ergeben sich aus den Unteransprüchen.

Mit dem erfindungsgemäßen Verfahren läßt sich die Brennkammertemperatur in einem für die Einhaltung gesetzlicher Vorschriften (z.B. in Bezug auf die Bildung NOₓ, CO, organisch C) und betrieblicher Erfordernisse optimalen Bereich halten, ohne daß mit sonstigen temperatursenkenden Maßnahmen wie unnötigem Luftüberschuß, sonstigem Wärmeentzug, Wassereindüsung usw. gearbeitet werden muß. Dabei wird der Volumenstrom an rückgeführtem Trocknungsabgas in Abhängigkeit zumindest von den wichtigen Betriebsparametern - Sauerstoffgehalt im Heißgas nach der Brennkammer, Brennkammertemperatur - geregelt. Diese Regelung sichert einen ausreichenden Luftüberschuß für den Verbrennungsvorgang, vermeidet aber einen unnötig hohen Luftüberschuß und hält die Brennkammertemperatur in einem für die betrieblichen Erfordernisse und den Verbrennungsvorgang optimalen Bereich. Gleichzeitig bleiben die Vorteile der Rückführung von Trocknungsabgas, das zumindest bis auf die Sättigungstemperatur abgekühlt wurde, wirkungsvoll erhalten. Somit zeichnet sich das erfindungsgemäße Verfahren wie folgt aus:
- Energieeinsparung dadurch, daß keine nur für die Kühlung der Brennkammer erforderlichen Luftmengen erwärmt werden müssen (unnötiger Luftüberschuß wird vermieden);
- kleinere Abluft-Reinigungsanlagen wegen der reduzierten Abluftmenge;
- bessere Voraussetzungen für eine Wärmerückgewinnung aus dem Trocknungsabgas durch höhere Wasserdampfbeladung des Trocknungsabgases;
- geringe Brandgefahr im Trockner durch reduzierten Sauerstoffgehalt im Heißgas; und
- geringe Bildung unerwünschter Oxidations- und Zersetzungsprodukte in der Mischkammer und im Trockner durch reduzierten Sauerstoffgehalt und erhöhten Wasserdampfgehalt im Heißgas.

Es ist verständlich, daß bei einer Rückführung des Trocknungsabgases der Sauerstoffgehalt dadurch absinkt, daß der Verbrennungsvorgang in der Brennkammer sauerstoffzehrend ist. Nun kann zwar der Eintrag von Verbrennungsluft bzw. Sauerstoff in den Verbrennungsvorgang mit dem Brennstoff zusammenhängend geregelt werden, doch ist dies unerwünscht, einerseits weil dadurch die Bildung von Schadstoffen, z.B. Stickoxyden, gefördert werden kann, und andererseits weil solche Trocknersysteme in der Regel im Unterdruck betrieben werden und dadurch ein Eintritt von Falschluft in kaum kontrollierbarer Form begünstigt wird. Es ist für die Regelbarkeit eines solchen Systems günstiger, wenn dieses so betrieben werden kann, daß die Möglichkeit einer Einhaltung eines konstanten Gehaltes an verfügbarem Sauerstoff im aus der Brennkammer austretenden Heißgas auch bei unterschiedlichen Betriebszuständen durch regeltechnische Maßnahmen einfach kontrolliert werden kann. Daher wird beim erfindungsgemäßen Verfahren die Gasrückführung so ausgelegt, daß der Gehalt an freiem Sauerstoff am Ausgang der Brennkammer überwacht wird und der entsprechende Meßwert mittels einer Regelung die Zufuhr von Sauerstoff steuert. Unter bestimmten Voraussetzungen, z.B. bei einer erforderlichen Begrenzung der Abgasmenge, kann es zweckmäßig sein, den erforderlichen freien Sauerstoff nicht mit Außenluft sondern in konzentrierter Form einzubringen.

Einer Erhöhung der Brennkammertemperatur über einen vorwählbaren Wert kann durch eine Erhöhung der Rückgasmenge, die infolge ihrer im Vergleich zur Brennkammertemperatur niedrigen Temperatur die Brennkammer kühlt, entgegen gewirkt und so die Brennkammertemperatur in einem optimalen Temperaturbereich gehalten werden. Dabei wird der Kühleffekt des Rückgases durch die höhere spezifische Wärmekapazität des im Rückgas enthaltenen Wasserdampfs verstärkt.

Die Abkühlung des Trocknungsabgases in einem Wäscher zumindest bis zur Sättigungstemperatur bewirkt nämlich, daß das Rückgas wasserdampfgesättigt vorliegt. Durch die Abkühlung reduziert sich das Volumen/Gewichtsverhältnis des Rückgases, was sich vorteilhaft auf die Dimensionierung der betreffenden Förderleitungen und Fördereinrichtungen auswirkt. Durch die Behandlung des Trocknungsabgases bzw. des Rückgases in einem Wäscher, z.B. in einem Kondensationswaschturm, wird nicht nur die Wasserdampfbeladung des zur Brennkammer zurückströmenden Rückgases beeinflußt, ebenfalls können unerwünschte Inhaltstoffe abgeschieden werden. Diese Maßnahme ist insbesondere dann vorteilhaft, wenn das Trocknungsabgas halogenhaltige Verbindungen enthält, aus denen in der Brennkammer Dioxine oder Furane entstehen könnten.

Aus den vorstehenden Hinweisen wird deutlich, daß das erfindungsgemäße Verfahren mit unterschiedlichen Zielsetzungen betrieben werden kann. Es ist möglich, den auf eine bestimmte Durchsatzleistung bezogenen Volumenstrom an Abgas zu minimieren und/oder den Energieeinsatz für eine bestimmte Trocknungsleistung zu minimieren und/oder die Energierückgewinnung, insbesondere in Form von Kondensationswärme, zu optimieren und/oder die Belastung des Abgases mit Schadstoffen zu minimieren.

Mit Vorteil kann zusätzlich zur Rückführung des abgekühlten Rückgases zum Brenner gekühltes oder nicht gekühltes Trocknungsabgas als Umgas unter Umgehung des Brenners zur Trocknungskammer zurückgeführt werden. Hierdurch ergeben sich verbesserte Möglichkeiten zur Einregelung der Betriebsparameter in Anpassung an die jeweiligen Gegebenheiten.

Bei Trocknungsanlagen ist es häufig der Fall, daß sich die Eintrittsfeuchten und Durchsatzmengen des zu trocknenden Gutes anfall- oder produktionsbedingt ändern. Ebenfalls ergeben sich oft variable Anforderungen an die Endfeuchte. Ferner sind unterschiedliche Beschaffenheit des zu trocknenden Gutes wie z.B. seine Stückgröße und evtl. auch schwankende Bedingungen der Außenluft zu berücksichtigen. Daher ist es insbesondere bei größeren Anlagen sinnvoll, die Rückgaszufuhr zur Brennkammer sowie ggf. auch die Umgaszufuhr zur Trocknungskammer mit einer automatischen Regelung zu verbinden, in welche die Betriebsparameter wie die Temperatur in der Brennkammer und/oder der Gehalt an freiem Sauerstoff im Heißgas bzw. am Brennkammerausgang und/oder der Wasserdampfgehalt des die Trocknungskammer verlassenden Trocknungsabgases und/oder der Durchsatz an zu trocknendem Gut eingehen. Im Interesse eines hohen Rückgasanteils kann es wie bereits erwähnt zweckmäßig sein, in die Brennkammer Sauerstoff in konzentrieter Form einzubringen.

Die Erfindung wird nachfolgend anhand einer schematischen Zeichnung näher erläutert. Diese zeigt ein Ausführungsbeispiel einer Anlage zur Durchführung des Verfahrens.

Die dargestellte Anlage weist einen mit Brennstoff 1 versorgten Brenner 2 mit einer Brennkammer 3 auf, der über eine Rückgasklappe 6 und eine Beiluftklappe 4 Rückgas 7 aus einer Rückgasleitung 7' und Beiluft 8 (Frischluft) zugeführt wird, wozu ein Ventilator 5 vorgesehen ist. Die Brennkammer 3 ist mit gemeinsam angedeuteten Sensoren 9 versehen, welche die Temperatur, den Sauerstoffgehalt, allenfalls den Unterdruck, den CO-Gehalt sowie evtl. noch zusätzliche andere Werte und Zustandsgrößen in der Brennkammer 3 messen, wobei die Signale der Sensoren 9 in der Steuerung 34 verarbeitet werden.

Die aus der Brennkammer 3 austretenden Heißgase 10 werden mittels einer Heißgasleitung 10' durch eine Mischkammer 11 der Trocknungskammer 12 eines Trockners 13 zugeführt. In die Mischkammer 11, die mit einem Sensor 14 für die Temperatur versehen ist, wird über eine Umgasklappe 15 Umgas 16 eingeleitet, das aus einer Umgasleitung 16' dem Heißgas 10 beigemischt wird.

Der Trockner 13 weist eine Gutzuführung 17 für das zu trocknende feuchte Gut 18 auf, bei dem es sich um Holzspäne, Holzfasern oder dergleichen aber ggf. auch um ein stück- oder teilchenförmiges zu trocknendes Gut aus einem anderen Material als Holz handeln kann. Das in der Trocknungskammer 12 in direktem Kontakt mit dem Heißgas 10 oder dem aus Heißgas 10 und Umgas 16 gebildeten Mischgas 11' gebrachte Gut tritt zusammen mit dem Trocknungsabgas durch eine Gutabführung 19 aus der Trocknungskammer 12 aus. Dort können Sensoren 20 angeordnet sein, mit denen weitere Daten wie z.B die Temperatur, der Wasserdampfgehalt usw. ermittelt und der Steuerung 34 zugeführt und von dieser verarbeitet werden.

Mittels eines Förderventilators 21 wird das Gut/Gas einem Zyklonabscheider 22 (Multi-Zyklon) zugeführt, aus dem einerseits das getrocknete Gut 23 und andererseits das Trocknungsabgas 24 austritt. Aus diesem Trocknungsabgas 24 wird wie dargestellt das Umgas 16 abgezweigt.

Das Trocknungsabgas 24 wird dem unteren Ende eines turmförmigen Kondensationswäschers 25 zugeleitet, von dessen Boden Kondensat 26 abgezogen wird und aus dessen oberen Ende Abgas 27 austritt, von dem wie dargestellt das Rückgas 7 abgezweigt wird. Das Abgas 27 wird einem Kamin zugeführt, wobei ggf. noch eine weitere nicht dargestellte Abgasnachbehandlung vorgesehen sein kann, beispielsweise bei einer Restwärmenutzung oder im Falle der vollständigen oder teilweisen Verwendung des Abgases für sonstige Zwecke, z.B. einer weitergehenden Abluftreinigung.

Durch den Kondensationswäscher 25 wird mittels einer Pumpe 28 Waschflüssigkeit 29 umgewälzt, die durch eine Umwälzleitung 30 einer Düse 31 im Kondensationswäscher 25 zugeführt wird. Die nach unten ausgesprühte Waschflüssigkeit trifft auf den aufsteigenden Strom des Trocknungsabgases 24, wobei der Kontakt zwischen der Waschflüssigkeit 29 und dem Trocknungsabgas 24 wie dargestellt durch Verteilungseinbauten 32 wie z.B. Füllkörper oder Böden verbessert werden kann.

Die Waschflüssigkeit 29 kühlt das Trocknungsabgas bis unter seine Taupunkttemperatur ab, so daß aus dem Trocknungsabgas 24 Wasserdampf kondensiert. Im Kondensat finden sich auch auskondensierte Schadstoffe, so daß das Trocknungsabgas im Kondensationswäscher 25 sowohl abgekühlt und entfeuchtet wie auch gereinigt wird. Die anfallende Kondensationswärme wird von der umgewälzten Waschflüssigkeit 29 aufgenommen und abgeführt sowie in einem Wärmetauscher 33 abgegeben, der in die Umwälzleitung 30 eingebaut ist. Die auf diese Weise zurückgewonnene Energie kann den jeweiligen Gegebenheiten entsprechend genutzt werden, beispielsweise auch zur nicht dargestellten Vorwärmung des zu trocknenden Guts 18.

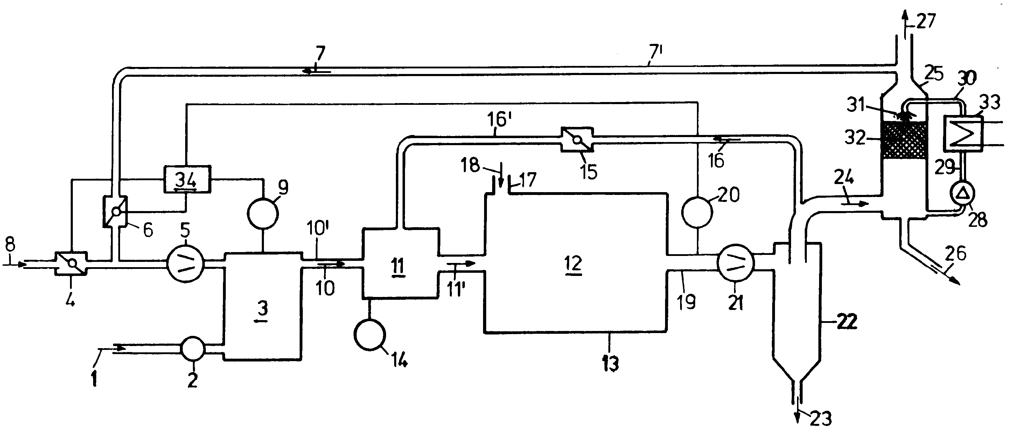

Auf die in der Zeichnung dargestellte Mischkammer 11 und Umgasleitung 16' mit der Rückführung von Umgas 16 kann ggf. verzichtet werden, so daß das Heißgas 10 aus der Brennkammer 3 direkt in die Trocknungskammer 12 eingeleitet wird. Dies gilt insbesondere für bestimmte zu trocknende Güter 18.

Zur Einhaltung der Nenntemperatur in der Brennkammer 3 wird nun bei einer Überschreitung der Nenntemperatur die Steuerung 34 die Rückgasklappe 6 öffnen. Die vermehrte Zufuhr von Rückgas kühlt die Brennkammer 3 und hält deren Temperatur im gewünschten Bereich. Wird der Steuerung 34 durch den Sensor 9 ein Unterschreiten des Mindestgehaltes an freiem Sauerstoff gemeldet, so wird die Beiluftklappe 4 geöffnet, welche die Zufuhr von Frischluft oder von sonstiger Abluft mit entsprechendem Sauerstoffgehalt oder von konzentrietem Sauerstoff oder von mit Sauerstoff angereicherter Luft freigibt. Dadurch erhöht sich die Sauerstoffzufuhr in die Brennkammer 3, und es stellen sich wieder für die Verbrennung optimale Bedingungen ein.

In das Regelsystem lassen sich weitere Kriterien wie z.B. der Wasserdampfgehalt an der Gutabführung 19 des Trockners 13, der CO-Gehalt des Heißgases 10 aus der Brennkammer 3, die Durchsatzleistung des Trockners 13, die Umgebungsluftbedingungen und andere einbeziehen, wodurch der Nutzen des erfindungsgemäßen Verfahrens weiter gesteigert werden kann.

Als Beispiel sei hier die Anpassung des Regelwertes für den Sauerstoffgehalt an unterschiedliche Verdampfungsleistungen des Trockners 13 erwähnt: Bei kleinerer Verdampfungsleistung ergibt sich ein geringerer Brennstoffbedarf und damit ansich eine geringere Heißgasmenge aus dem Verbrennungsvorgang und auch ein geringerer Bedarf an Rückgas 7 zur Kontrolle der Brennkammertemperatur. Dies führt zu längeren Verweilzeiten der Verbrennungsgase in der Brennkammer 3, und damit kann bereits mit geringerem Überschuß an freiem Sauerstoff im Heißgas aus der Brennkammer 3 ein guter Ablauf des Verbrennungsvorgangs erreicht werden. Es kann also so bei reduzierter thermischer Leistung der Brennkammer 3 das spezifische Volumen an Trocknungsabgas weiter reduziert werden. Analog dazu kann bei Verwendung unterschiedlicher Brennstoffe 1 der erforderliche Luftüberschuß und die Brennkammertemperatur den jeweiligen Brennstoffeigenschaften angepaßt werden.

Ersichtlich kann der Mischkammer 11 anstelle des aus nicht abgekühltem Trocknungsabgas 24 abgezweigten Umgases 16 auch ein Umgas zugeführt werden, das wie das Rückgas 7 im Kondensationswäscher 25 abgekühlt (und gereinigt) wurde. Über die Zweckmäßigkeit einer solchen Verfahrensführung entscheiden im wesentlichen die erforderlichen Volumenströme bzw. deren Verhältnis zueinander und die spezifischen Eigenschaften des zu trocknenden Gutes 18. So kann der erforderliche Umgasstrom dann verhältnismässig groß sein, wenn die Trocknereintrittstemperatur erheblich unter der Brennkammeraustrittstemperatur liegt bzw. liegen soll. Dies kann aber Nachteile mit sich bringen, die zu einem erhöhten anlagetechnischen Aufwand führen, aber auch in geänderten Trocknungsbedingungen begründet sein können. Andererseits können sich durch eine Rückführung von bereits abgekühltem Umgas in die Mischkammer 11 auch Vorteile ergeben, die unter bestimmten Bedingungen eine solche Betriebsweise sinnvoll erscheinen lassen.

## Patentansprüche

1. Verfahren zum Trocknen von feuchtem Gut, insbesondere von Holzspänen oder Holzfasern, bei dem das feuchte Gut (18) durch eine Trocknungskammer (12) geleitet und in dieser mit einem Heißgas (10) gemischt wird, das aus einer mit Sauerstoff versorgten Brennkammer (3) zugeführt wird, wobei nachfolgend das getrocknete Gut (23) vom Trocknungsabgas (24) getrennt und das Trocknungsabgas zumindest teilweise wieder als Rückgas (7) zur Brennkammer (3) zurückgeführt und im übrigen als Abgas (27) abgeführt wird und das Rückgas (7) vor seiner Einleitung in die Brennkammer (3) zumindest bis zur Sättigungstemperatur abgekühlt wird, **dadurch gekennzeichnet**, daß der Rückgasdurchsatz und die Zufuhr von Sauerstoff zur Brennkammer (3) in Abhängigkeit von der Temperatur in der Brennkammer (3) und vom Gehalt an freiem Sauerstoff im Heißgas (10) aus der Brennkammer (3) geregelt wird.

2. Verfahren nach Anspruch 1, **dadurch gekennzeichnet**, daß der Rückgasdurchsatz zusätzlich in Abhängigkeit vom Wasserdampfgehalt des Trocknungsabgases (24) geregelt wird.

3. Verfahren nach Anspruch 1 oder 2, **dadurch gekennzeichnet**, daß der Rückgasdurchsatz zusätzlich in Abhängigkeit vom Gutdurchsatz geregelt wird.

4. Verfahren nach einem der Ansprüche 1 bis 3, **dadurch gekennzeichnet**, daß der Brennkammer (3) mit Sauerstoff angereicherte Frischluft zugeführt wird.

5. Verfahren nach einem der Ansprüche 1 bis 4, **dadurch** **gekennzeichnet,** daß ein weiterer Teil des Trocknungsabgases (24) als Umgas (16) in die Trocknungskammer (12) zurückgeführt wird.

6. Anlage zur Durchführung der Verfahren nach Anspruch 1 bis 5, mit einem eine Gutzuführung (17) und eine Gutabführung (19) aufweisenden Trockner (13), einer über eine Heißgasleitung (10') mit dem Trockner (13) verbundenen Brennkammer (3), einem an die Gutabführung (19) angeschlossenen Abscheider (22) für das getrocknete Gut (23), einem an den Trocknungsabgasausgang des Abscheiders (22) angeschlossenen Kondensationswäscher (25) und einer zur Brennkammer (3) führenden Rückgasleitung (7'), die von einer Abgasleitung hinter dem Kondensationswäscher (25) abzweigt, **dadurch gekennzeichnet**, daß der Brennkammer (3) Sensoren (9) für die Temperatur und den Gehalt an freiem Sauerstoff zugeordnet sind, die über Signalleitungen mit einer Steuereinrichtung (34) verbunden sind, die über eine erste Steuerleitung eine in die Rückgasleitung (7') eingebaute Rückgasklappe (6) und über eine zweite Steuerleitung eine in die Leitung für Frischluft (8) eingebaute Luftklappe (4) steuert.

7. Anlage nach Anspruch 6, **dadurch gekennzeichnet**, daß in die Heißgasleitung (10') zwischen der Brennkammer (3) und dem Trockner (13) eine vom Trocknungsabgasausgang des Abscheiders (22) vor oder hinter dem Kondensationswäscher (25) ausgehende Umgasleitung (16') einmündet, ggf. in eine in die Heißgasleitung (10') eingebaute Mischkammer (11).

8. Anlage nach Anspruch 7, **dadurch gekennzeichnet,** daß auch in die Umgasleitung (16') eine Klappe (15) für die Durchsatzregelung eingebaut ist.

## Claims

1. Process for drying humid material, particularly of wood chips or wood fibers, in which process the humid material (18) is passed through a drying chamber (12) and is mixed therein with a hot gas (10) which is fed from a combustion chamber (3) supplied with oxygen, whereby the dried material (23) is thereafter separated from the drying waste gas (24) and the drying waste gas is at least in parts returned as recycling gas (7) to the combustion chamber (3) and is, for the rest, evacuated as waste gas (27), and the recycling gas (7) is cooled down to at least the saturation temperature prior to its admission into the combustion chamber (3), **characterized** **in that** the recycling gas rate and the supply of oxygen toward the combustion chamber (3) is controlled in dependence on the temperature prevailing in the combustion chamber (3) and on the content of free oxygen in the hot gas (10) from the combustion chamber (3).

2. Process according to claim 1, **characterized in that** the recycling gas rate is additionally controlled in dependence on the steam content in the drying waste gas (24).

3. Process according to claim 1 or 2, **characterized in that** the recycling gas rate is additionally controlled in dependence on the throughput rate of the material.

4. Process according to any of claims 1 to 3, **characterized** **in that** the combustion chamber (3) is fed with oxygen-enriched fresh air.

5. Process according to any of claims 1 to 4, **characterized in that** another part of the drying waste gas (24) is returned as circulating gas (16) into the drying chamber (12).

6. Installation for carrying out the process according to claims 1 to 5, comprising a drier (13) which has a material feeding means (17) and a material evacuating means (19), a combustion chamber (3) which is connected with the drier (13) through a hot gas conduit (10'), a separating device (22) for the dried material (23) and which is connected with the material evacuating means (19), a condensing washer (25) which is connected with the drying waste gas outlet of the separating device (22), and a recycling gas conduit (7') which leads to the combustion chamber (3) and is branched off a waste gas conduit downstream of the condensing washer (25), **characterized in that** the combustion chamber (3) is associated with sensors (9) to detect temperature and the content of free oxygen, said sensors being connected through signalling lines with a control means (34) which controls a recycling gas butterfly valve (6), integrated into the recycling gas conduit (7'), through a first control line, and an air butterfly valve (4), integrated into the conduit for fresh air (8), through a second control line.

7. Installation according to claim 6, **characterized in that** a circulating gas conduit (16') which comes from the drying waste gas outlet of the separating device (22) upstream or downstream of the condensing washer (25) opens into the hot gas conduit (10') at a point between the combustion chamber (3) and the drier (13), or, if necessary, into a mixing chamber (11) integrated into the hot gas conduit (10').

8. Installation according to claim 7, **characterized in that** a butterfly valve ((15) for the rate control is built also into the circulating gas conduit (16').

## Revendications

1. Procédé pour le séchage de produits humides, plus particulièrement de copeaux de bois ou de fibres de bois, procédé dans lequel les produits humides (18) sont amenés à travers une chambre de séchage (12) et sont mélangés dans celle-ci avec un gaz chaud (10) introduit à partir d'une chambre de combustion (3) alimentée en oxygène, les produits séchés (23) étant séparés ensuite du gaz perdu de séchage (24), et le gaz perdu de séchage étant retourné, au moins en partie, en tant qu'air de recyclage (7) à la chambre de combustion (3) et étant évacué, pour le reste, en tant que gaz perdu (27), et le gaz de recyclage (7) étant refroidi jusqu'à sa température de saturation, au moins, avant son introduction dans la chambre de combustion (3), ledit procédé **carac****térisé en ce que** le débit du gaz de recyclage et l'alimentation en oxygène vers la chambre de combustion (3) sont réglés en fonction de la température existant dans la chambre de combustion (3) et de la teneur en oxygène libre du gaz chaud (10) sortant de la chambre de combustion (3).

2. Procédé selon la revendication 1, **caractérisé en ce que** le débit du gaz de recyclage est réglé en outre en fonction de la teneur en vapeur d'eau du gaz perdu de séchage (24).

3. Procédé selon la revendication 1 ou 2, **caractérisé en ce que** le débit du gaz de recyclage est réglé en outre en fonction du débit des produits à sécher.

4. Procédé selon l'une quelconque des revendications 1 à 3, **caractérisé en ce que** l'on introduit dans la chambre de combustion (3) de l'air frais enrichi d'oxygène.

5. Procédé selon l'une quelconque des revendications 1 à 4, **caractérisé en ce qu'**une autre partie du gaz perdu de séchage (24) est retournée à la chambre de séchage (12) en tant que gaz de circulation (16).

6. Installation destinée à la mise en oeuvre du procédé selon les revendications 1 à 5, ladite installation comportant un sécheur (13) équipé d'un dispositif d'alimentation de produits (17) et d'un dispositif d'évacuation de produits (19), une chambre de combustion (3), reliée au sécheur (13) par l'intermédiaire d'une conduite de gaz chaud (10'), un séparateur (22) des produits séchés (23), connecté au dispositif d'évacuation des produits (19), un laveur à condensation (25), connecté à la sortie du gaz perdu de séchage du séparateur (22), et une conduite de retour de gaz (7') reliée à la chambre de combustion (3) et branchée sur une conduite de gaz perdu en aval du laveur à condensation (25), **caractérisée en ce que** des détecteurs (9), sensibles à la température et à la teneur en oxygène libre, sont associés à la chambre de combustion (3), ces détecteurs étant reliés, par l'intermédiaire de lignes d'acheminement de signaux, à un dispositif de réglage (34) qui, par l'intermédiaire d'une première ligne de commande, assure le réglage d'un volet (6) agissant sur le gaz de recyclage et incorporé dans la conduite de gaz de recyclage (7'), et par l'intermédiaire d'une seconde ligne de commande, assure le réglage d'un volet d'air (4) incorporé dans la conduite d'air frais (8).

7. Installation selon la revendication 6, **caractérisée en ce qu'**une conduite de gaz de circulation (16') partant de la sortie du gaz perdu de séchage du séparateur (22), en amont ou en aval du laveur à condensation (25), débouche dans la conduite de gaz chaud (10') s'étendant entre la chambre de combustion (3) et le sécheur (13), le cas échéant, dans une chambre de mélange (11) incorporée dans la conduite de gaz chaud (10').

8. Installation selon la revendication 7, **caractérisée en ce qu'**un volet (15) destiné au réglage du débit est incorporé aussi dans la conduite de gaz de circulation (16').
